(19) Europäisches Patentamt
European Patent Office
Office européen des brevets

(11) EP 2 075 789 A2

(12) **EUROPEAN PATENT APPLICATION**

(43) Date of publication:
**01.07.2009 Bulletin 2009/27**

(51) Int Cl.:
***G09G 3/36*** *(2006.01)*

(21) Application number: **08154028.8**

(22) Date of filing: **03.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.12.2007 US 16577 P**

(71) Applicant: **TPO Displays Corp.**
**Miao-Li County (TW)**

(72) Inventor: **Edwards, Martin**
**Crawley, Sussex RH11 7DA (GB)**

(74) Representative: **Ketelaars, Maarten F.J.M.**
**Nederlandsch Octrooibureau**
**Postbus 29720**
**2502 LS Den Haag (NL)**

# (54) Transient control drive method and circuit, and image display system thereof

(57) The present invention relates to a transient control drive method, for driving a liquid crystal capacitor of a pixel circuit from a first voltage level to a second voltage level, comprises: driving the liquid crystal capacitor from the first voltage level to an intermediate voltage level; and driving the liquid crystal capacitor from the intermediate voltage level to the second voltage level. The present invention further provides a transient control drive circuit and an image display system thereof.

*Fig 1*

10
S1
S2
S1
V1
VS
VLC
V2
13
14
15
11
12
VCAP
VCOM

EP 2 075 789 A2

## Description

### Field of the Invention

The present invention relates to an image display system, and more particularly to a transient control drive circuit and method of the image display system.

### Background of the Invention

It is known that the switching time of the pixels in the image display system, and especially in an active matrix liquid crystal (LC) display, is affected by changes in the capacitance of the liquid crystal element after the pixel has been addressed.

In a case of a normally white TN liquid crystal display, when switching between different brightness states the capacitance of the pixel changes, in which the liquid crystal element has a relatively low capacitance when in the light state and a relatively high capacitance when in the dark state. The response time of the liquid crystal element, the time required to switch from one brightness state to another, is typically longer than the charging time of the pixel therefore changes in capacitance occur after the pixel has been addressed. In the periods between addressing the pixels, the holding periods, the pixel voltage is maintained by the pixel capacitance which typically consists of the capacitance of the liquid crystal element and a storage element. Any changes in the value of the pixel capacitance during the holding period caused by changes in the capacitance of the liquid crystal layer will cause the pixel voltage to change.

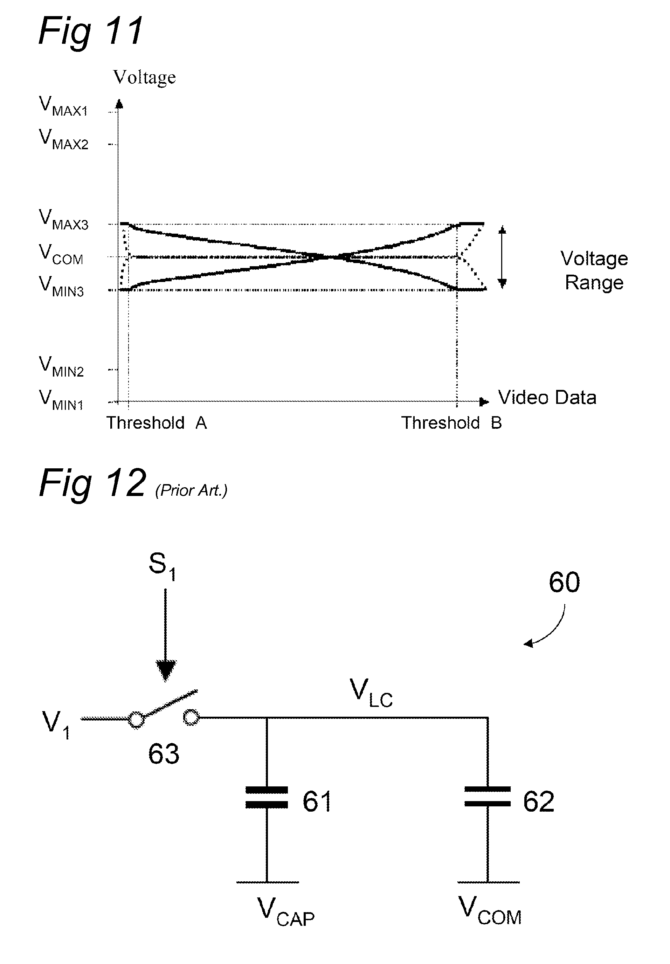

Referring to FIG. 12, it shows a circuit diagram of a conventional pixel 60 in an active matrix LC display. The pixel 60 has a storage capacitor 61 and a liquid LC (liquid crystal) capacitor 62 for the display of the brightness of the pixel 60, wherein the capacitances of the storage capacitor 61 and the LC capacitor 62 compose a pixel capacitance of the pixel 60. A column drive voltage source $V_1$ is supplied to the pixel 60 and carries grayscale information to determine the brightness of the pixel 60. The pixel 60 is addressed by applying a control signal $S_1$ to turn on a switch 63 causing one side of the storage capacitor 61 and the LC capacitor 62 to be charged to the output voltage level of the voltage source $V_1$, wherein $V_{LC}$ represents the voltage level on one side of the LC capacitor 62 which is the drive voltage applied to the LC capacitor 62. And also, a voltage source $V_{COM}$ , which indicates the common voltage of the LC capacitor 62, is applied to another side opposite the side with $V_{LC}$ of the LC capacitor 62, and a voltage source $V_{CAP}$ is applied to one side opposite the side with $V_{LC}$ of the storage capacitor 61.

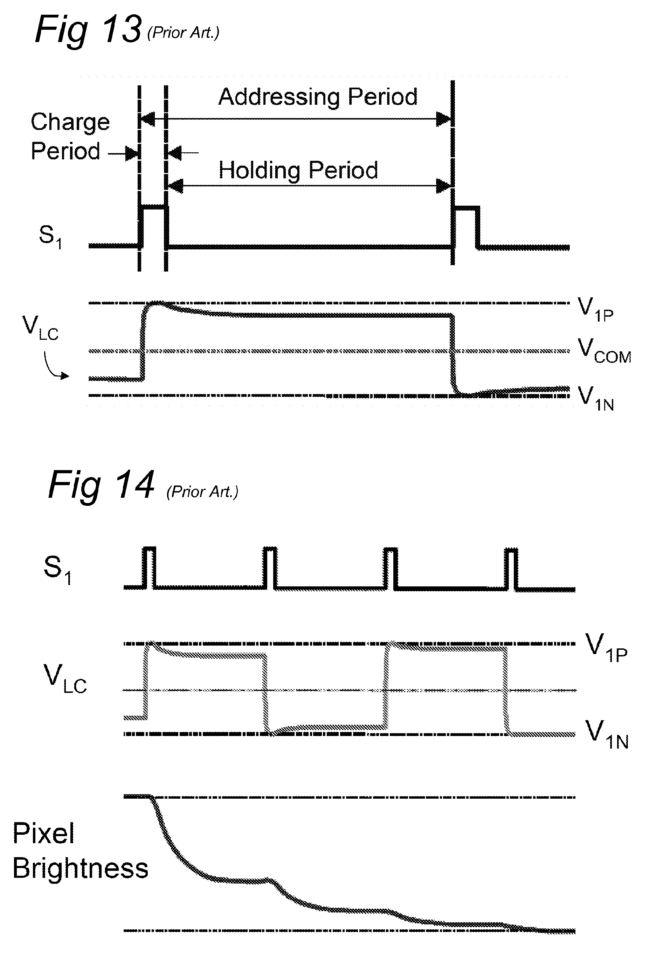

When the pixel 60 is switched from a lighter state to a darker state, the magnitude of the drive voltage $V_{LC}$ applied to the LC capacitor 62 is changed from a lower value to a higher value, as shown in FIG. 13. Referring to FIG. 13, it shows the addressing of the pixel 60 as shown in FIG. 12, in which $V_{1P}$ represents the output voltage level of the voltage source $V_1$ when the pixel 60 is addressed with a positive voltage, and $V_{1N}$ represents the output voltage level of the voltage source $V_1$ when the pixel 60 is addressed with a negative voltage. The magnitude of the drive voltage $V_{LC}$ relative to the common voltage $V_{COM}$ is increased to charge the LC capacitor 62 and to switch the pixel 60 to the darker state.

During the first holding period after the pixel 60 is addressed with the higher drive voltage level $V_{1P}$, the LC capacitor 62 will start to switch state and the capacitance of the LC capacitor 62 will increase. This causes the capacitance of the LC capacitor 62 to increase from the value when the pixel 60 was addressed and as a result the drop voltage value across the LC capacitor 62 falls. Referring to the following equation:

$$V_{DROP} = (V_1 - V_{COM})\frac{C_S + C_{LC}*}{C_S + C_{LC}},$$

wherein $V_{DROP}$ represents the drop voltage value across the LC capacitor 62, $C_S$ represents the capacitance of the storage capacitor 61, $C_{LC}$ represents the instantaneous value of the capacitance of the LC capacitor 62, and $C_{LC}*$ represents the capacitance of the LC capacitor 62 when the switch 63 was turned off at the end of the charging period.

The change in $V_{DROP}$ that occurs after the pixel 60 is charged opposes the desired change in the brightness and therefore the pixel 60 will only move part of the way towards its new brightness state during this first addressing period. The next time that the pixel 60 is addressed the pixel capacitance is again charged to a level corresponding to the required new brightness state. The voltage source $V_1$ is typically inverted in polarity each time that the pixel 60 is addressed and this inverted voltage is represented by the voltage level $V_{1N}$ opposite the voltage level $V_{1P}$ as shown in FIG. 13. During the second holding period the capacitance of the LC capacitor will again increase as the brightness state of the pixel 60 moves closer to its intended steady state value although the magnitude of the change will be smaller than before. Once again this will cause the value of $V_{DROP}$ to fall.

In each successive addressing period after the change to the voltage level $V_{LC}$ of the LC capacitor 62, the pixel brightness will move closer to its steady state value as indicated in FIG. 14. Referring to FIG. 14, it shows the relationship between the voltage level $V_{LC}$ and the pixel brightness. Even if the response time of the LC capacitor 62 is less than one addressing period, it can take several addressing periods for the pixel 60 to approach its new steady state brightness following a change. A similar effect occurs when switching the pixel 60 from a darker state to a lighter state, to switch the pixel 60 to a lighter state it must be addressed with a lower voltage. During the first holding period after the lower voltage is applied to the pixel the liquid crystal will start to switch and its capacitance will reduce. As the capacitance $C_{LC}$ reduces the voltage value $V_{DROP}$ on the pixel 60 increases and this tends to oppose the desired change in the pixel brightness.

In summary under active matrix drive conditions with conventional drive schemes, the time taken for the pixel to switch from a first brightness state to a second brightness state will be significantly extended even if the response time of the liquid crystal is less than the addressing period due to the effect of the voltage dependent capacitance of the liquid crystal.

## Summary of the Invention

One objective of the present invention is to provide a transient control drive method and circuit for the pixels in an image display system, and especially to a LC display, to improve the switching behavior of the pixels.

The other objective of the present invention is to provide the improvement of power consumption of the pixels from limiting the increase of the column drive voltages and reducing the required column drive voltages.

In order to achieve the objectives above, the present invention provides a transient control drive method, for driving a liquid crystal capacitor of a pixel circuit from a first voltage level to a second voltage level, comprises: driving the liquid crystal capacitor from the first voltage level to an intermediate voltage level; and driving the liquid crystal capacitor from the intermediate voltage level to the second voltage level.

In order to achieve the objectives above, the present invention further provides a transient control drive circuit, for driving a liquid crystal capacitor of a pixel circuit from a first voltage level to a second voltage level, comprises: the liquid crystal capacitor; a storage capacitor, electrically coupled to the liquid crystal capacitor; and a switch device, for controlling the storage capacitor to be driven to a third voltage level, the liquid crystal capacitor to be driven from the first voltage level to an intermediate voltage level, and the liquid crystal capacitor to be driven from the intermediate voltage level to the second voltage level from a charge sharing with the storage capacitor.

In order to achieve the objectives above, the present invention further provides an image display system, comprises: a plurality of pixel circuits, each pixel circuit has a transient control drive circuit, for driving a liquid crystal capacitor of a pixel circuit from a first voltage to a second voltage, comprises: the liquid crystal capacitor; a storage capacitor, electrically coupled to the liquid crystal capacitor; and a switch device, for controlling the storage capacitor to be driven to the second voltage, the liquid crystal capacitor to be driven from the first voltage to an intermediate voltage, and the liquid crystal capacitor to be driven from the intermediate voltage to the second voltage via the storage capacitor; a first voltage source, for driving the storage capacitor to the third voltage level; and a second voltage source, for driving the liquid crystal capacitor from the first voltage level to the intermediate voltage level.

According to the above description, the present invention takes a drive scheme for driving the liquid crystal element in two levels, first level is to reset the drop voltage across the liquid crystal element, and second level is to raise the drop voltage across the liquid crystal to achieve a desired brightness state.

The present invention proposes the drive scheme to eliminate the delay in switching of the pixels which is achieved by addressing the pixel in such a way that the pixel voltage does not depend on the value of the liquid crystal capacitance at the time that the pixel is addressed, and modifies the switching behavior of the pixel in a controlled way in response to changes in the operating conditions of the display in order to improve the performance of the display when showing switching or moving images. Furthermore, the present invention also provides reduced power consumption of the display after the combination of the drive scheme and the control of the common electrode voltage.

## Brief description of the drawings

The objects, spirits and advantages of the preferred embodiments of the present invention will be readily understood by the accompanying drawings and detailed descriptions, wherein:

FIG. 1 shows a circuit diagram of one pixel in one embodiment of the present invention;

FIG. 2 shows the waveforms of the addressing in the pixel as shown in FIG. 1;

FIG. 3 shows the waveforms of the overshoot in the pixel as shown in FIG. 1;

FIG. 4 shows the waveforms of the undershoot in the pixel as shown in FIG. 1;

FIG. 5 shows the waveforms of the pixel brightness in the pixel as shown in FIG. 1;

FIG. 6 shows a circuit diagram of another pixel in one embodiment of the present invention;

FIG. 7 shows the waveforms of the addressing in the pixel as shown in FIG. 6;

FIG. 8 shows a circuit diagram of the other pixel in one embodiment of the present invention;

FIG. 9 shows the voltage levels of the column drive voltages in the pixel as shown in FIG. 6;

FIG. 10 shows the waveforms of the switch behavior in the pixel as shown in FIG. 6;

FIG. 11 shows the voltage levels of the column drive voltages in the pixel with the three level common electrode voltage;

FIG. 12 shows a circuit diagram of a conventional pixel in an active matrix LC display

FIG. 13 shows the waveforms of the addressing in the pixel as shown in FIG. 12; and

FIG. 14, it shows the waveforms of the pixel brightness in the pixel as shown in FIG. 12.

**Detailed description of the Invention**

The present invention has been fully described by referring to the accompanying drawings containing the preferred embodiments according to the present invention. However, before the description, those skilled in the art can modify the invention described in the context and obtain the effect of the present invention. Thus, it should be understood that the description set forth herein is a general disclosure to those skilled in the art, and these contents should not be construed as limitation to the present invention.

The present invention relates to an image display system having a plurality of pixels. The present invention proposes a drive scheme to improve switching behavior of the pixel without the additional cost and complexity of signal processing solutions.

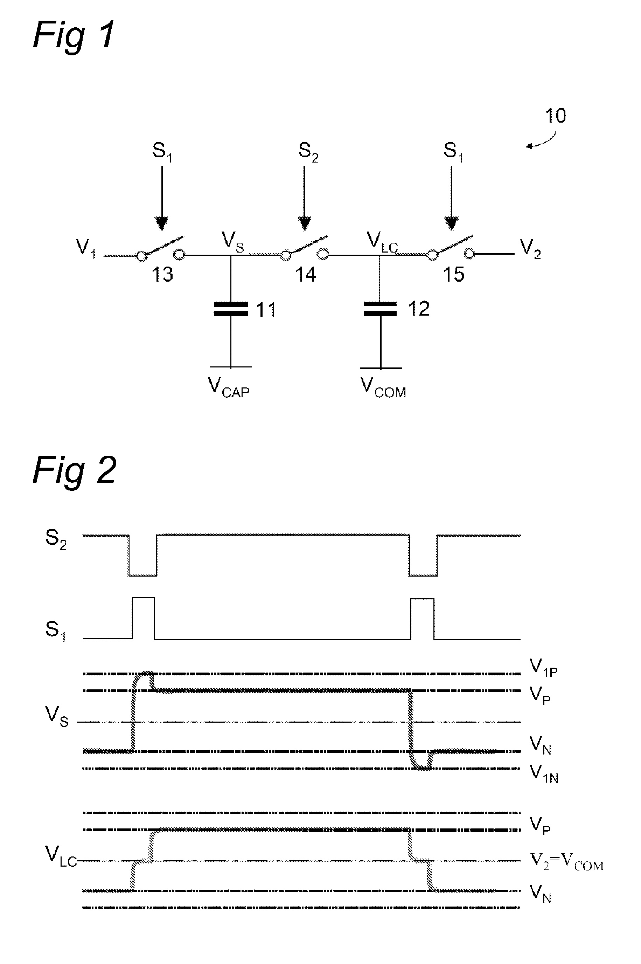

Referring to FIG. 1, it shows a pixel 10 in one embodiment of the present invention. The pixel 10 has a storage capacitor 11, a liquid crystal (LC) capacitor 12, and three switches 13, 14 and 15 which are shown to represent the active devices, for example thin film transistors, and used to address the pixel 10.

One voltage source $V_1$ is supplied via the switch 13 to charge the storage capacitor 11, the other one voltage source $V_2$ is supplied via the switch 15 to charge the LC capacitor 12, and the switch 14 is used to connect the storage capacitor 11 and the LC capacitor 12 for charge sharing, wherein the switches 13, 15 are controlled form one control signal $S_1$ and the switch 14 is controlled form one control signal $S_2$. In which, $V_S$ represents the voltage level on another side of the storage capacitor 11, and $V_{LC}$ represents the voltage level on another side of the LC capacitor 12. Additionally, a voltage source $V_{COM}$ is applied to another side opposite the side with $V_{LC}$ of the LC capacitor 12, and a voltage source $V_{CAP}$ is applied to one side opposite the side with $V_S$ of the storage capacitor 11.

Referring to FIG. 2, it shows the waveforms of the addressing in the pixel 10 as shown in FIG. 1, wherein $V_{1P}$ represents the high voltage level of the column drive voltage source $V_1$, $V_{1N}$ represents the low voltage level of the column drive voltage source $V_1$, $V_P$ represents the positive pixel voltage level under steady state drive conditions, and $V_N$ represents the negative pixel voltage level under steady state drive conditions. In the embodiment, the voltage source $V_2$ outputs a voltage level equal to the output voltage level of the voltage source $V_{COM}$.

When the control signal $S_2$ goes LOW opening the switch 14 to separate the two capacitors 11 and 12 first, then the control signal S1 goes HIGH, therefore, the voltage level $V_S$ is charged to the output voltage level of the voltage source $V_1$, and the voltage level $V_{LC}$ is charged to the output voltage level of the voltage source $V_2$. When the charging of the capacitors 11, 12 are complete, the control signal $S_1$ returns to LOW and the two capacitors 11, 12 are isolated from the two voltage source $V_1$ and $V_2$, and then S2 returns to HIGH and the two capacitors 11, 12 are connected together for charge sharing.

The voltage present across the LC capacitor 12 after the charge sharing takes place can be represented by the equation as below:

$$V_{DROP} = (V_1 - V_{COM}) \frac{C_S}{C_S + C_{LC}},$$

wherein, $C_S$ represents the value of the capacitance of the storage capacitor 11, $C_{LC}$ represents the instantaneous or present value of the capacitance of the LC capacitor 12, and $V_{DROP}$ represents the voltage value across the LC capacitor 12 after the charge sharing with the storage capacitor 11 and therefore represents the voltage across the LC capacitor 12 after the charge sharing takes place.

The voltage value $V_{DROP}$ does not depend on the capacitance of the LC capacitor 12 at the time when the pixel 10 is addressed. This is because the LC capacitor 12 is discharged when the pixel 10 is addressed, and therefore the charge present on the pixel 10 after the charge sharing operation does not depend on the value of the capacitance of the LC capacitor 12 when the pixel 10 is addressed. If the response time of the LC capacitor 12 is less than the addressing period then the pixel 10 will achieve the correct brightness state within one addressing period of a change in drive level being applied.

Therefore, the voltage value $V_{DROP}$ after the charge sharing operation does not depend on the capacitance of the LC capacitor 12 when the pixel 10 is addressed, but depends on the instantaneous value $C_{LC}$ of the capacitance of the LC capacitor 12 which has a beneficial effect on the switching time of the LC capacitor 12.

Under steady state conditions, when the pixel 10 has reached its intended brightness state as steady state, the drive voltage level $V_{LC}$ experienced by the LC capacitor 12 depends on the corresponding steady state capacitance $C_{LCSS}$ of the LC capacitor 12. However, before the pixel 10 reached the steady state condition, the LC capacitor 12 will experience a different voltage level with the instantaneous value $C_{LC}$ of the capacitance of the LC capacitor 12.

When the pixel 10 is being driven from a higher to a lower brightness state, the instantaneous value $C_{LC}$ will initially be less than the steady state capacitance $C_{LCSS}$, and then the instantaneous value of the voltage value $V_{DROP}$ of the LC capacitor 12 will be higher than the steady state value. The increase of the voltage value $V_{DROP}$ will tend to drive the LC capacitor 12 towards the lower brightness state more quickly therefore reducing the switching time of the pixel 10.

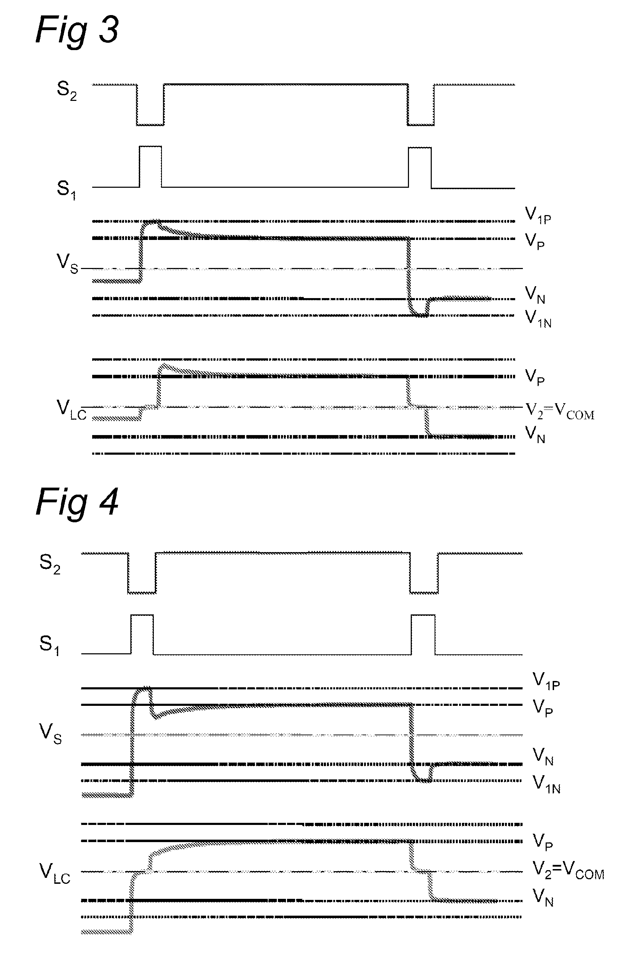

And when the pixel 10 is being driven from a lower to a higher brightness state, the instantaneous value $C_{LC}$ will initially be greater than the steady state capacitance $C_{LCSS}$, and then the voltage value $V_{DROP}$ of the LC capacitor 12 will be lower than the steady state value. The decrease of the voltage value $V_{DROP}$ will tend to drive the LC capacitor 12 towards the higher brightness state more quickly therefore reducing the switching time of the pixel 10. Therefore, the voltage value $V_{DROP}$ of the LC capacitor 12 tends to overshoot or undershoot its steady state from the voltage level $V_{LC}$ as shown in FIG. 3 and FIG. 4.

FIG. 3 shows the overshoot of the drop voltage across the LC capacitor 12, in which the pixel 10 is being switched from a higher brightness state, corresponding to a lower drive voltage level $V_{LC}$, to a lower brightness state with a higher drive voltage level $V_{LC}$. After the pixel 10 is addressed, the value of the instantaneous value of $C_{LC}$ is initially below its steady state value, and the voltage level $V_{LC}$ initially overshoots its steady state value $V_P$, and the voltage value $V_{DROP}$ overshoots its steady state value. As the LC capacitor 12 reacts to the growth in voltage level $V_{LC}$ and the capacitance $C_{LC}$ increases, the voltage value $V_{DROP}$ across the LC capacitor 12 decreases and tends towards the steady state value.

FIG. 4 shows the undershoot of the drop voltage across the LC capacitor 12, in which the pixel 10 is being switched from a lower brightness state, corresponding to a higher voltage level $V_{LC}$, to a higher brightness state with a lower voltage level $V_{LC}$. After the pixel 10 is addressed, the instantaneous value of $C_{LC}$ is initially above its steady state value, and the voltage level $V_{LC}$ initially undershoots its steady state value level $V_P$, and the voltage value $V_{DROP}$ undershoots its steady state value. As the LC capacitor 12 reacts to the reduction in voltage level $V_{LC}$ and the capacitance $C_{LC}$ decreases, the voltage value $V_{DROP}$ across the LC capacitor 12 increases and tends towards the steady state value.

According to the above embodiment, the voltage source $V_2$ is set close to or equal to the voltage level applied to one side of the LC capacitor 12, typically the output voltage level of the common electrode voltage source $V_{COM}$, so that the capacitance $C_{LC}$ of the LC capacitor 12 is largely or completely discharged when the pixel 10 is addressed. Hence, the voltage value $V_{DROP}$ across the LC capacitor 12 can be made largely independent of the capacitance of the LC capacitor 12 at the time the pixel 10 is addressed. Furthermore, the way the voltage level $V_{LC}$ is generated on the LC capacitor 12 means that the voltage level $V_{LC}$ will overshoot or undershoot its steady state value when the LC capacitor 12 is switching, which will tend to increase the speed with which the LC capacitor 12 changes state.

In one embodiment of the present invention, the voltage source $V_2$ is no longer constrained to being close to or equal to the output voltage level of the voltage source $V_{COM}$, and the equation for the voltage source $V_{DROP}$ generated across the LC capacitor 12 is now modified as indicated below:

$$V_{DROP} = (V_1 - V_{COM})\frac{C_S}{C_S + C_{LC}} + (V_2 - V_{COM})\frac{C_{LC}^*}{C_S + C_{LC}},$$

wherein, $C_{LC}^*$ represents the capacitance of the LC capacitor 12 when the pixel 10 is addressed and therefore the voltage level $V_{LC}$ is charged to the output voltage level of the voltage source $V_2$.

The first term in the equation for the voltage $V_{DROP}$ results in the switching behavior described previously in which given sufficient time for the LC capacitor 12 to respond the pixel 10 will achieve the intended state within one addressing period. The second term in the equation provides a modification of the voltage $V_{DROP}$ by changing the output voltage level of the voltage source $V_2$.

If the subtraction of output voltage levels of the voltage source $V_2$ with $V_{COM}$ ($V_2$-$V_{COM}$) has the same polarity as the subtraction of output voltage levels of the voltage source $V_1$ with $V_{COM}$ ($V_1$-$V_{COM}$), then the pixel 10 switches state with a response that is over-damped, and two or more addressing periods are required for the pixel 10 to move to a new state. If ($V_2$-$V_{COM}$) has opposite polarity as ($V_1$-$V_{COM}$), then the pixel 10 switches state with a response that is under-damped, and the pixel 10 initially overshoots the intended state and again takes two or more addressing periods to approach the steady state condition.

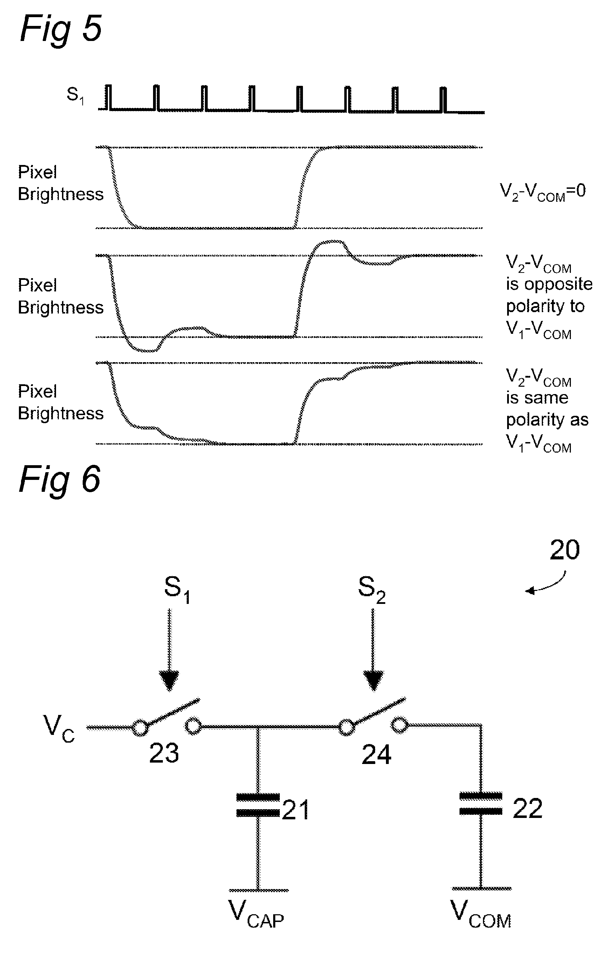

Referring to FIG. 5, it shows transitions between a lower and a higher brightness state with different output voltage levels of the voltage source $V_2$. If ($V_2$-$V_{COM}$) has the same polarity as ($V_1$-$V_{COM}$) then the pixel 10 switches state with a response that is over-damped and it takes two or more addressing periods for the pixel 10 to move to its new state. If ($V_2$-$V_{COM}$) has the opposite polarity to ($V_1$-$V_{COM}$) then the pixel 10 switches with an under-damped response and the pixel 10 initially overshoots its intended state and again takes two or more addressing periods to approach its steady state condition.

If the response time of the LC capacitor 12 is longer than the addressing period of the pixel 10 then the response time of the LC capacitor 12 will tend to dominate in determining the overall switching behavior of the pixel 10. However, selecting an output level of the voltage source $V_2$ which would produce an under-damped response may help to reduce the switching time of the LC capacitor 12.

The polarity of ($V_2$-$V_{COM}$) relative to ($V_1$-$V_{COM}$) determines the characteristics of the switching behavior as indicated above. The magnitude of ($V_2$-$V_{COM}$) determines the extent to which the switching characteristics of the pixel 10 are under-damped or over-damped. The magnitude of ($V_2$-$V_{COM}$) may be preset at a certain value which results in the desired transient behavior. Alternatively the magnitude of ($V_2$-$V_{COM}$) may be varied depending on the operating conditions of the LCD system such as temperature or video content. The output level of the voltage source $V_2$ might be made dependent on the grayscale to which the pixel 10 is being driven, so that both voltage sources $V_1$ and $V_2$ are dependent on the video information, which can reduce the dependence of the switching behavior of the pixel 10 on the initial and final gray levels of the transition in brightness.

As described in above, the present invention significantly reduces or eliminates the dependence of the pixel brightness at the end of an addressing period on the state of the pixel 10 when it was charged at the start of the addressing period. This means that if the response time of the LC capacitor 12 is less than the addressing period then the pixel 10 will achieve its correct brightness state within one addressing period following a change in the magnitude of the drive voltage. The LC capacitor 12 is not charged directly with the voltage source $V_1$ representing the video information. When the pixel 10 is addressed, the voltage $V_{DROP}$ across the LC capacitor 12 is set close to or equal to zero and the storage capacitor 11 is charged to the output level of the voltage source $V_1$ which represents a brightness value of the video information. The video information is then transferred to the LC capacitor 12 by redistributing charge between the storage capacitor 11 and the LC capacitor 12.

The voltage source $V_1$ on the pixel 10 and the final brightness state of the pixel 10 after it has responded to any change in voltage level $V_{LC}$ are then independent of the capacitance of the LC capacitor 12 at the time that the pixel 10 is charged. The time for which the voltage value $V_{DROP}$ is discharged in the embodiment of the present invention will typically be short compared to the response time of the LC capacitor 12, so that there will be little or no change in the brightness or brightness state of the pixel 10 during this time.

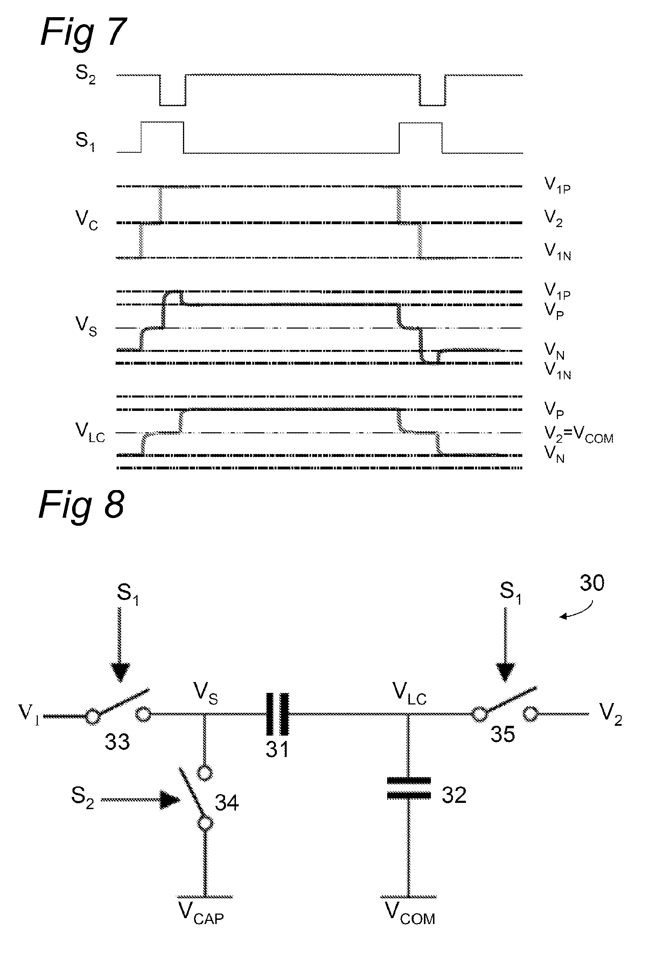

In one embodiment of the present invention, another control circuit of one pixel 20 is shown in FIG. 6. The pixel 20 includes one storage capacitor 21, one LC capacitor 22, and only two switches 23 and 24, wherein the two voltage sources $V_1$ and $V_2$ are applied to the column connection of the pixel 20 in time sequence as one voltage source $V_C$ as shown in FIG. 7. The equation of the voltage $V_{DROP}$ across the LC capacitor 22 is the same with which in the embodiment as shown in FIG. 1.

Further, in another one embodiment of the present invention, a control circuit of one pixel 30 is shown in FIG. 8. The pixel 30 includes one storage capacitor 31, one LC capacitor 32, and three switches 33, 34 and 35, wherein the video information is coupled onto the LC capacitor 32 by changing the voltage level $V_S$ on one side of the storage capacitor 31. Charge redistribution takes place between the storage capacitor 31 and the LC capacitor 32 when the voltage level $V_S$ is switched from the output voltage level of the voltage source $V_1$ to the output voltage level of the voltage source $V_{CAP}$. The voltage value $V_{DROP}$ across the LC capacitor 32 can be represented by the equation below:

$$V_{DROP} = (V_{CAP} - V_1)\frac{C_S}{C_S + C_{LC}} + (V_2 - V_{COM})\frac{C_S + C_{LC}{}^*}{C_S + C_{LC}},$$

wherein, if the output voltage levels of the voltage source $V_2$ and $V_{CAP}$ equal to the output voltage level of the voltage source $V_{COM}$, then this equation becomes the same as the equation of the pixel 10 in FIG. 1 except that the first term has opposite sign.

As described above, in some embodiments, the voltage value across the LC capacitor is not discharged when the pixel is addressed. The pixel is instead charged to a voltage that alternates in polarity in synchronism with the alternating polarity of the video information applied to the pixel via the storage capacitor. The polarity of this voltage may be the same as that applied to the liquid crystal capacitor via the pixel storage capacitor in which case the pixel will have an over-damped switching response, or it may have the opposite polarity to the signal applied to the liquid crystal via the storage capacitor in which case the pixel will have an under-damped switching response. It is further proposed that the voltage applied to the LC capacitor during the addressing period is modified in order to control the switching behavior of the pixel and improve the perceived performance of the image display system. The column drive voltage level may be varied with the intended brightness level of the pixel so that the voltage source applied to the LC capacitor also contains video information.

As a result of the charge sharing of the present invention, larger column drive voltage levels than those in the convention pixel control circuit are required to set a brightness state. Take the pixel 20 of FIG. 6 for example, in which the voltage level $V_{LC}$ applied to the LC capacitor 22 is less than the output voltage level of the column drive voltage source $V_1$, therefore the required output voltage level of the voltage source $V_1$ of the pixel 20 is higher than the conventional pixel.

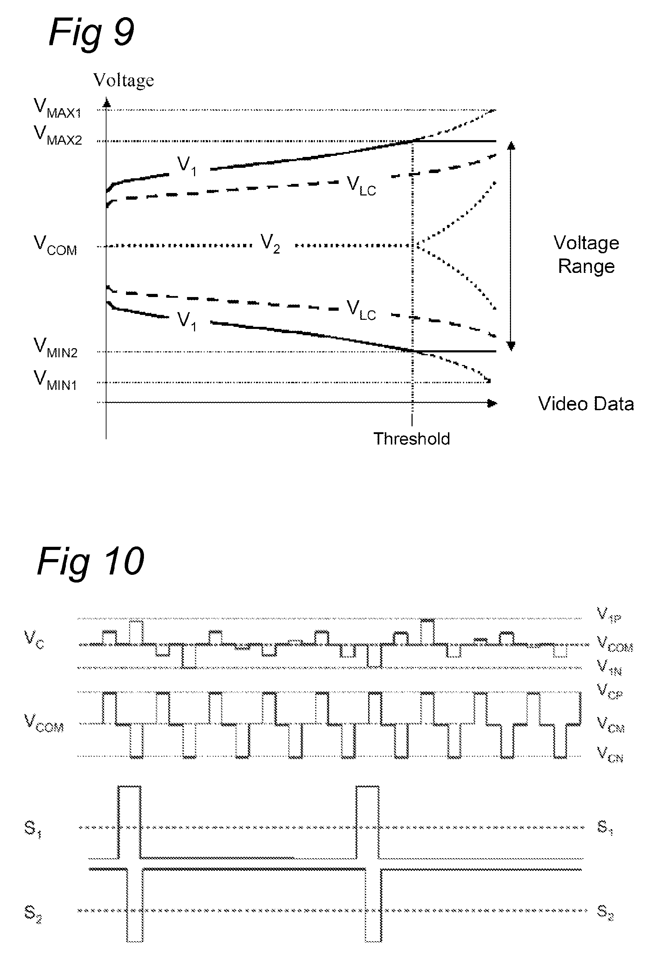

In one embodiment of the present invention, the output voltage level of the column drive voltage source $V_1$ is limited to avoid additional power consumption. Referring to FIG. 9, it shows the column drive voltage levels of pixel 20 as shown in FIG. 6, wherein voltage levels $V_{MAX1}$ and $V_{MIN1}$ represent the original limits of the output voltage level of the voltage source $V_1$, and $V_{MAX2}$ and $V_{MIN2}$ represent the reduced limits of the output voltage level of the voltage source $V_1$.

Under the embodiment, if voltage source $V_2$ is used to provide additional voltage to the pixel 20 for the highest drive voltage level, then the voltage range of output voltage level of the voltage source $V_1$ can be limited. When the output voltage level of the voltage source $V_2$ is not restricted to the output voltage level of the voltage source $V_{COM}$ over the entire video data range, the range of the output voltage level of the voltage source $V_1$ can be reduced to voltage levels $V_{MAX2}$ and $V_{MIN2}$.

In the positive drive period, as the video data increases, the output voltage level of the voltage source $V_1$ becomes more positive with respect to the output voltage level of the voltage source $V_{COM}$ until it reaches the voltage level $V_{MAX2}$ at the video data value indicated as Threshold. For video data values beyond Threshold, the output voltage level of the voltage source $V_1$ is held constant at voltage level $V_{MAX2}$ and the output voltage level of the voltage source $V_2$ is made more positive to provide the additional drive voltage required by the LC capacitor 22.

In the negative drive period, as the video data value increases, the output voltage level of the voltage source $V_1$ becomes more negative with respect to the output voltage level of the voltage source $V_{COM}$ until it reaches the voltage level $V_{MIN2}$ at the video data value indicated as Threshold. For video data values beyond Threshold, the output voltage level of the voltage source $V_1$ is held constant at voltage level $V_{MIN2}$ and the output voltage level of the voltage source $V_2$ is made more negative to provide the additional drive voltage required by the LC capacitor 22.

As the output voltage level of the voltage source $V_2$ departs from the output voltage level of the voltage source $V_{COM}$ above the Threshold, the switching behaviour of the pixel 20 will be degraded until the output voltage level of the voltage source $V_2$ is equal to the output voltage level of the voltage source $V_1$ at which point the switching behaviour will be the same as for conventional driving. By making the voltage source $V_2$ dependent on the video data in this way, it is possible to trade off the switching performance improvement against the increased power consumption of the display that results from the higher column drive voltages.

Further, there is a particular video data value, indicated as the Threshold, at which the output voltage level of the voltage source $V_1$ stops changing and the output voltage level of the voltage source $V_2$ starts changing. In practice, it may be preferable to start increasing the output voltage level of the voltage source $V_2$ before the output voltage level of the voltage source $V_1$ reaches its maximum voltage level $V_{MAX2}$ so that over a range of video data values both the output voltage levels of the voltage source $V_1$ and $V_2$ are changing, which will help to prevent any image artefacts associated with the switch from the video data controlling the output voltage level of the voltage source $V_1$ to the video data controlling the output voltage level of the voltage source $V_2$. The output voltage levels of the voltage source of $V_1$ and $V_2$ that are required to achieve a particular LC drive voltage level and therefore a particular steady state pixel brightness can be estimated using the relationship described in the embodiment of FIG. 1.

In one embodiment of the present invention, the requirement of the output voltage level of the voltage source $V_1$ is reduced because of the combination of the charge driving method with the common electrode driving method. In the common electrode drive method, a differential voltage (reset voltage) is applied to the LC capacitor 22, therefore $V_{COM}$ will be negative when $V_1$ is positive, and $V_{COM}$ will be positive when V1 is negative. Referring to FIG. 10, it shows the waveforms of the common electrode voltage and the column drive voltages of pixel 20 as shown in FIG. 6, wherein $V_{CP}$ represents the positive voltage level of $V_{COM}$ during the negative drive period, $V_{CN}$ represents the negative voltage level of $V_{COM}$ during the positive drive period, and $V_{CM}$ represents the mean value voltage level of $V_{COM}$. In this case it may be preferable to reset the LC capacitor 22 when the intermediate voltage level $V_{CM}$ is applied to the common electrode voltage source $V_{COM}$.

During the periods when the reset voltage is applied to the LC capacitor 22 the common electrode voltage source $V_{COM}$ is switched to its mean value $V_{CM}$ and this same voltage is applied to the column electrode. With this approach there is no increase in the column voltage range associated with the need to apply the common electrode voltage to the columns of the display.

In addition, the limitation of the voltage source $V_1$ as shown in FIG. 9 and the variation of the voltage source $V_{COM}$ can be combined as shown in FIG. 11, wherein the output voltage level of the voltage source $V_2$ is set equal to the output voltage level of the voltage source $V_{COM}$ for lower data values but set to a value between the output voltage levels of the voltage source $V_1$ and $V_{COM}$ for the highest data values. Where part of the alternating drive voltage scheme can be applied to the pixel via the drive voltage $V_{COM}$ or via $V_{CAP}$ of the pixel, and it may be preferable to limit the value of $V_1$ at the lowest as well as the highest data values as shown in FIG. 11.

For data values lying between a lower value (Threshold A) and an upper value (Threshold B), the output voltage level of the voltage source $V_2$ is set equal to the output voltage level of the voltage source $V_{COM}$ in the voltage level $V_{CM}$, and the output voltage level of the voltage source $V_1$ is varied to control the brightness of the pixel.

For data values below Threshold A, the output voltage level of the voltage source $V_1$ is limited to a voltage level $V_{MIN3}$ in the case of a positive addressing phase and to a voltage level $V_{MAX3}$ in the case of a negative addressing phase, and the output voltage level of the voltage source $V_2$ is set to a value between the output voltage level of the voltage source $V_1$ and the mean common electrode voltage level $V_{CM}$, the value being chosen to produce the required voltage on the LC capacitor after the charge sharing operation.

For data values above Threshold B, the output voltage level of the voltage source $V_1$ is limited to the voltage level $V_{MAX3}$ in the case of a positive addressing phase and to the voltage level $V_{MIN3}$ in the case of a negative addressing phase, and the output voltage level of the voltage source $V_2$ is again set to a level between the output voltage level of the voltage source $V_1$ and the mean common electrode voltage level $V_{CM}$, the value being chosen to produce the required voltage on the LC capacitor after the charge sharing operation.

And, therefore, the range the output voltage level of the voltage source $V_1$ can be reduced while the benefits of the charge driving method are retained for most video data values.

In summary, the present invention not only proposes the drive scheme to eliminate the delay in switching of the pixels which achieved by addressing the pixel in such a way that the drop voltage across the liquid crystal capacitor does not depend on the value of the liquid crystal capacitance at the time that the pixel is addressed, but also modifies the switching behavior of the pixel in a controlled way in response to changes in the operating conditions of the display in order to improve the performance of the display when showing switching or moving images. Furthermore, the present invention also provides the reduced power consumption of the pixels after the combination of the drive scheme and the control of the common electrode voltage.

After detailed description of the preferred embodiments according to the present invention, those skilled in the art can clearly understand to conduct various change and modification without departing from the scope and spirit of the claims hereinafter, and the present invention is not limited to the applications of embodiments listed in the application context.

## Claims

1. A transient control drive method, for driving a liquid crystal capacitor of a pixel circuit from a first voltage level to a second voltage level, comprises:

    driving the liquid crystal capacitor from the first voltage level to an intermediate voltage level; and

driving the liquid crystal capacitor from the intermediate voltage level to the second voltage level.

2. The transient control drive method according to Claim 1, wherein the liquid crystal capacitor is driven from the first voltage level to the intermediate voltage level via a first power source.

3. The transient control drive method according to Claim 1, wherein the liquid crystal capacitor is driven from the intermediate voltage level to the second voltage level via a second power source.

4. The transient control drive method according to Claim 1, further driving a storage capacitor of the pixel circuit to a third voltage level, and then the liquid crystal capacitor is driven to the second voltage level from a charge sharing with the storage capacitor.

5. The transient control drive method according to Claim 1, wherein the drop voltage across the liquid crystal capacitor is reset while the liquid crystal capacitor is driven to the intermediate voltage level.

6. The transient control drive method according to Claim 1, wherein the second voltage level corresponds to a brightness value received from the pixel circuit.

7. The transient control drive method according to Claim 6, wherein the drop voltage across the liquid crystal capacitor has a voltage level corresponding to the received brightness value.

8. A transient control drive circuit, for driving a liquid crystal capacitor of a pixel circuit from a first voltage level to a second voltage level, comprises:

the liquid crystal capacitor;
a storage capacitor, electrically coupled to the liquid crystal capacitor; and
a switch device, for controlling the storage capacitor to be driven to a third voltage level, the liquid crystal capacitor to be driven from the first voltage level to an intermediate voltage level, and the liquid crystal capacitor to be driven from the intermediate voltage level to the second voltage level from a charge sharing with the storage capacitor.

9. The transient control drive circuit according to Claim 8, wherein the switch device includes a first switch to control the storage capacitor to be driven to the third voltage level, a second switch to control the liquid crystal capacitor to be driven from the first voltage level to an intermediate voltage level, and a third switch to control the charge sharing between the liquid crystal capacitor and the storage capacitor to drive the liquid crystal capacitor from the intermediate voltage level to the second voltage level via the storage capacitor.

10. The transient control drive circuit according to Claim 8, wherein the switch device includes a first switch to control the storage capacitor to be electrically coupled to a first power source to control the storage capacitor to be driven to the third voltage level, and a second switch to control the storage capacitor to be electrically coupled to the liquid crystal capacitor to control the charge sharing between the liquid crystal capacitor and the storage capacitor.

11. The transient control drive circuit according to Claim 8, wherein the drop voltage across the liquid crystal capacitor is reset while the liquid crystal capacitor is driven to the intermediate voltage level.

12. The transient control drive circuit according to Claim 8, wherein the value of the second voltage level corresponds to a brightness value received from the pixel circuit.

13. The transient control drive circuit according to Claim 8, wherein the drop voltage across the liquid crystal capacitor has a voltage level corresponding to the received brightness value.

14. An image display system, comprises:

a plurality of pixel circuits, each pixel circuit has a transient control drive circuit as claimed in Claim 8;
a first voltage source, for driving the storage capacitor to the third voltage level; and
a second voltage source, for driving the liquid crystal capacitor from the first voltage level to the intermediate voltage level.

**15.** The image display system according to claim 14, wherein the image display system being a mobile phone, digital camera, personal digital assistant (PDA), notebook computer, desktop computer, television, global positioning system (GPS), car display, aviation display monitor, digital photo frame or portable DVD player.

*Fig 1*

10
S1
S2
S1
V1
VS
VLC
V2
13
14
15
11
12
VCAP
VCOM

*Fig 2*

S2
S1
V1P
VP
VS
VN
V1N
VP
VLC
V2=VCOM
VN

# Fig 3

S2
S1
V1P
VP
VS
VN
V1N
VP
VLC
V2=VCOM
VN

# Fig 4

S2
S1
V1P
VP
VS
VN
V1N
VP
VLC
V2=VCOM
VN

*Fig 5*

$S_1$
Pixel Brightness
$V_2-V_{COM}=0$
Pixel Brightness
$V_2-V_{COM}$ is opposite polarity to $V_1-V_{COM}$
Pixel Brightness
$V_2-V_{COM}$ is same polarity as $V_1-V_{COM}$

*Fig 6*

20
$S_1$
$S_2$
$V_C$
23
24
21
22
$V_{CAP}$
$V_{COM}$

# Fig 7

S2
S1
VC
V1P
V2
V1N
VS
V1P
VP
VN
V1N
VLC
VP
V2=VCOM
VN

# Fig 8

S1
S1
30
V1
VS
VLC
V2
33
31
35
S2
34
32
VCAP
VCOM

# Fig 9

Voltage
$V_{MAX1}$
$V_{MAX2}$
$V_1$
$V_{LC}$
$V_{COM}$
$V_2$
$V_{LC}$
$V_1$
$V_{MIN2}$
$V_{MIN1}$
Voltage Range
Video Data
Threshold

# Fig 10

$V_C$
$V_{1P}$
$V_{COM}$
$V_{1N}$
$V_{COM}$
$V_{CP}$
$V_{CM}$
$V_{CN}$
$S_1$
$S_1$
$S_2$
$S_2$

## Fig 11

Voltage
$V_{MAX1}$
$V_{MAX2}$
$V_{MAX3}$
$V_{COM}$
$V_{MIN3}$
$V_{MIN2}$
$V_{MIN1}$
Voltage Range
Video Data
Threshold A
Threshold B


## Fig 12 *(Prior Art.)*

$S_1$
60
$V_{LC}$
$V_1$
63
61
62
$V_{CAP}$
$V_{COM}$

*Fig 13* (Prior Art.)

Addressing Period
Charge
Period
Holding Period
S1
VLC
V1P
VCOM
V1N

*Fig 14* (Prior Art.)

S1
VLC
V1P
V1N
Pixel
Brightness